Europäisches Patentamt

European Patent Office

Office européen des brevets

(11) Veröffentlichungsnummer: **0 450 079 A1**

(12) **EUROPÄISCHE PATENTANMELDUNG**
**veröffentlicht nach Art. 158 Abs. 3**
**EPÜ**

(21) Anmeldenummer: **90905352.2**

(22) Anmeldetag: **23.10.89**

(86) Internationale Anmeldenummer:
**PCT/SU89/00272**

(87) Internationale Veröffentlichungsnummer:
**WO 91/06012 (02.05.91 91/10)**

(51) Int. Cl.5: **G01P  15/09**

(43) Veröffentlichungstag der Anmeldung:
**09.10.91 Patentblatt  91/41**

(84) Benannte Vertragsstaaten:
**BE DE FR GB IT SE**

(71) Anmelder: **VSESOJUZNOE
KHOZRASCHETNOE
VNESHNEEKONOMICHESKOE OBIEDDINENIE
"TEKHSNABEXPORT"**
**Staromonetny per., 26**
**Moscow, 109180(SU)**

(72) Erfinder: **SMIRNOV, Vladimir Vasilievich**
**per. Sadovy, 33-19 Vladimirskaya obl.**

**Juriev-Polsky, 601826(SU)**
Erfinder: **YAROVIKOV, Valery Ivanovich**
**ul. Mira, 74-112 Kalininskaya obl.**
**Vyshny Volochek, 171110(SU)**
Erfinder: **KIRPICHEV, A. A. ul. Alexeeva, 7-20**
**Starorussky raion Novgorodskaya obl.**
**pos. Novoselsky, 175207(SU)**

(74) Vertreter: **Ritter und Edler von Fischern,**
**Bernhard,Dipl.-Ing. et al**
**HOFFMANN - EITLE & PARTNER**
**Arabellastrasse 4**
**W-8000 München 81(DE)**

(54) **PIEZOELEKTRISCHER BESCHLEUNIGUNGSMESSER.**

(57) Der piezoelektrische Beschleunigungsmesser enthält einen zylindrischen piezoelektrischen Messfühler (1), der eine Schubverformung durch ein Trägheitselement (2) erfährt, bei dem in Richtung der Höchstempfindlichkeitsachse (A) eine Durchgangsbohrung (17) für einen ersten Stromanschluss (15) ausgeführt ist, der von einer Stirnfläche des piezoelektrischen Messfühlers (1) zu dessen anderer Stirnfläche durchgeführt ist, in deren Nähe der erste Stromanschluss (15) mit der inneren Seitenfläche des zylindrischen piezoelektrischen Messfühlers (1) elektrisch verbunden ist, während der zweite Stromanschluss (16) mit der äusseren Seitenfläche des zylindrischen piezoelektrischen Messfühlers (1) seitens der ersten Stirnfläche des letztgenannten elektrisch verbunden ist, in deren Nähe die Anschlusstelle der Stromanschlüsse (15, 16) liegt, die mit einem die letzteren umschliessenden Versteifungsglied (7) versehen ist.

Gebiet der Technik

Die Erfindung bezieht sich auf das Gebiet der Messung und Überwachung von Bewegungsparametern und betrifft insbesondere miniaturisierte piezoelektrische Beschleunigungsmesser für Stoss- und Schwingungsbeschleunigungen mit einem ringförmigen piezoelektrischen Messfühler.

Zugrundeliegender Stand der Technik

Im Zusammenhang mit der bestehenden Tendenz zur Verringerung der Abmessungen zu entwickelnder Erzeugnisse, zur Vergrösserung der Bauelementedichte sowie im Zusammenhang mit der Notwendigkeit, die Beschleunigungen von Elementen mit einer Masse von 1 g und darunter beispielsweise von funkelelektronischen Elementen zu messen, erscheint die Anwendung von grosstechnisch eingeführten Beschleunigungsmessern von 1 bis 10 g Masse und 1 bis 2 cm³ Volumen wegen einer Wechselwirkung zwischen dem Messobjekt und -gerät bei mechanischen Prüfungen als nicht möglich. Zur Anwendung im Bestand einer für mechanische Prüfungen von funkelektronischen Elementen vorgesehenen Apparatur werden piezoelektrische Beschleunigungsmesser benötigt, deren Masse einige Zehntel Gramm und deren Volumen einige Hundertstel Kubikzentimeter betragen.

Das Entwerfen derartiger miniaturisierter piezoelektrischer Beschleunigungsmesser (Geber) bereitet aber eine Reihe von Schwierigkeiten.

Einmal wird der Geber kommensurabel mit dem Aussendurchmesser eines Kabels, das als Stromanschluss dient, mit dessen Hilfe ein elektrisches Signal an den Elektroden des piezoelektrischen Messfühlers abgenommen und auf Anpassungsgeräte übertragen wird. In diesem Zusammenhang prädestiniert die Notwendigkeit einer Verringerung der Masse und des Umfanges des Beschleunigungsmessers eine sinnvolle Wahl nicht nur seines Wirkungsschemas, sondern auch seiner Bauelemente, insbesondere der Baugruppe des Kabelanschlusses im Gehäuse des Beschleunigungsmessers.

Die Lösung des gestellten Problems wird auch noch dadurch kompliziert, dass der minimale Aussendurchmesser von schwingungsfesten Kabeln 1, 2 mm beträgt. Aus diesem Grunde führt eine proportionale Verringerung der Abmessungen der Bauelemente der im technischen Masstab eingeführten Geber auf die Abmessungen des Kabels und darunter zu keiner wesentlichen Verringerung der Abmessungen und Masse wegen einer Vergrösserung des relativen Anteilesddes Gehäuses und der Baugruppe des Kabelanschlusses, was es nicht gestattet, eine Miniaturausführung des piezoelektrischen Beschleunigungsmessers zu realisieren.

Zum anderen nimmt mit der Verringerung der Abmessungen und Masse des Gebers auch die Empfindlichkeit ab, während der Störpegel wegen des Einflusses eines die Messgenauigkeit herabsetzenden triboelektrischen Effektes im Kabel demzufolge zunimmt (G.P.Nubert "Izmeritelnye preobrazovateli neelektricheskikh velichin" (Messwandler für nichtelektrische Grössen), Verlag "Energia", Leningrad, 1970, S. 307). Hierbei übt den grössten Einfluss auf den Pegel der Störung von der Triboelektrizität, wie die Untersuchungen zeigen, der am Geber unmittelbar anliegende Kabelabschnitt (insbesondere die Baugruppe des Kabelanschlusses) aus, weil gerade auf diesen Bereich die grössten relativen Verschiebungen und folglich auch Mikroabblätterungen der Bauelemente des Kabels (des Innenleiters, der Isolation, des Geflechtes, der äusseren Isolation) bei Schwingungs- und Stossbeanspruchungen konzentriert sind. Um derartige Störungen geringer zu halten, ist es notwendig, die relativen Verschiebungen der genannten Bauelemente durch eine satte Auflage des Kabelabschnitts an dessen Montageort im Geber nach Möglichkeit zu verringern. Hierbei müssen die besonderen Anforderungen an die Konstruktion der Baugruppe des Kabelanschlusses selbst gestellt werden. Die wichtigsten davon sind

1) Sicherung einer gleichmässigen radialen und axialen Steifigkeit zwischen den Bauelementen des Kabels über die Gesamtlänge des in das Gehäuseinnere einzuführenden Kabelabschnitts;

2) Sicherung einer festen (schlupffreien) Verbindung zwischen den Bauelementen des Kabels und die Befestigung des Kabels im Gehäuse;

3) Ermöglichung einer elektrischen Verbindung mit dem Innenleiter und mit dem Geflecht mit Hilfe einfacher konstruktiver Mittel.

Darüber hinaus ist es beim Entwerfen der miniaturisierten Geber notwendig, ausser der Miniaturisierung der Baugruppe des Kabelanschlusses selbst, die Sicherheit der Befestigung des Kabels im Gehäuse, einen hermetischen Abschluss der Verbindung zu gewährleisten.

Die bekannten konstruktiven Ausführungen der piezoelektrischen Beschleunigungsmesser (Kabelabschlüsse) (SU, A, 1027625 , 546822, 832642, 930463, 148828) gestatten es, eine mechanische Befestigung, einen hermetischen Abschluss der Verbindung und erforderliche elektrische Kontakte zu gewährleisten. Die obengenannten Konstruktionen weisen aber wesentliche Nachteile auf: entweder schliessen sie eventuelle Abblätterungen und Mikroverschiebungen der Strukturelemente des Kabels im Bereich seiner Befestigung (SU, A, 832642, 148828) nicht aus und sind dementsprechend dem Einfluss des triboelektrischen Effektes ausgesetzt oder sie besitzen grosse Abmessungen und Masse, sind in der technischen Realisierung kompliziert, haben viele Bauelemente (SU, A, 832642, 930463). Die oben angegebenen Nachteile lassen in der Folge keine Möglichkeit zu, eine Miniaturausführung des piezoelektrischen Beschleunigungsmessers zu realisieren.

So ist der piezoelektrische Messfühler beispielsweise im Geber (SU, A, 1027625) auf der Grundplatte exzentrisch angeordnet, im Gehäuse sind ein geneigter Kanal und ein schräger Stoss für den Kabelanschluss ausgeführt, und das Kabel selbst ist in der Grundplatte mittels eines durch einen stromleitenden Einsatz hindurchgeführten Stiftes befestigt. Die relativ kleinen Abmessungen werden hier durch die exzentrische Anordnung des Messfühlers und die Kabelausführung durch den geneigten Kanal hindurch erreicht. Das Entwerfen der Miniaturausführung des Beschleunigers (mit einem Volumen von einigen Hundertstel cm³) nach derartigem Gerätebild erweist sich aber im Zusammenhang mit einer entsprechenden Zunahme des für die Kabelausführung seitlich des Messfühlers benötigten Anteiles des Umfanges als grundsätzlich unmöglich. Hierbei ändert sich die Exzentrizität des Messfühlers gegen das Gehäuse (im Falle einer Verringerung der Abmessungen der Bauelemente des Gebers) nicht, weil ihr Betrag durch die Masse (Durchmesser) des Kabels und der Lötverbindung des Innenleiters des Kabels mit der Kontaktscheibe definiert wird.

Ausserdem eliminiert der Kabelabschluss im betrachteten piezoelektrischen Beschleunigungsmesser unter den Bedingungen intensiver alternierender Überbeanspruchungen eventuelle Abblätterungen und Mikroverschiebungen der Strukturelemente des Kabels nicht, weil die äussere Kabelisolation über die Gesamtlänge des Abschnitts der Befestigung keineswegs starr befestigt ist (es fehlt eine Adhäsion der Kompoundmasse an einer Fluorkunststoffisolierung), während das mechanische Andrücken durch den Stift kein allseitiges Stauchen des Kabels sichert, was zu einer Erhöhung von Störungen infolge des triboelektrischen Effektes führt. Darüber hinaus wird das Kabel bei derartiger Befestigung in einem lokalen Bereich angedrückt, was sehr unsicher ist und bei alternierenden Verschiebungen zu einem Kabelbruch in diesem Bereich führt.

Das Gerätebild des bekannten piezoelektrischen Beschleunigungsmessers (SU, A, 1023241) ist einfach, sieht ein Minimum von Teilen vor, ermöglicht ein Entwerfen eines miniaturisierten Geräts. Die Anwendung eines piezoelektrischen Messfühlers, der unter der Einwirkung von axialen Beschleunigungen Schubverformungen erleidet, gestattet es, unter sonst gleichen Bedingungen eine grosse Empfindlichkeit gegenüber den Beschleunigungsmessern zu erzielen, deren piezoelektrischer Messfühler Druck- oder Biegebeanspruchungen unterzogen wird.

Der bekannte piezoelektrische Beschleunigungsmesser (SU, A, 1023241) enthält einen zylindrischen piezoelektrischen Messfühler, der eine Schubverformung durch ein Trägheitselement erfährt, dessen Aussenfläche mit der Innenfläche des zylindrischen piezoelektrischen Messfühlers spielfrei gekoppelt ist. Der zylindrische piezoelektrische Messfühler ist in der Weise fest angeordnet, dass seine Höchstempfindlichkeitsachse praktisch parallel zur Aussen- und Innenfläche des zylindrischen piezoelektrischen Messfühlers ist. Die Abnahme der elektrischen Ladung von den genannten Zylinderoberflächen erfolgt mit Hilfe von Stromanschlüssen, von denen erster mit der Innenfläche des piezoelektrischen Messfühlers elektrisch verbunden und zweiter mit seiner Aussenfläche spielfrei gekoppelt ist. Der zylindrische piezoelektrische Messfühler mit der Masse des Messfühlers im Inneren ist im Gehäuse auf einer Auflage angeordnet, wobei die Auflage im Gehäuse in Kegelform mit einem sich in Grenzen von $90 < \alpha < 180°$ bewegenden Kegelwinkel ausgeführt ist, während die Oberflächen des piezoelektrischen Zylinders, des Gehäuses und der Masse spielfrei gekoppelt sind.

Der bekannte piezoelektrische Beschleunigungsmesser gestattet es aber bei einer beliebigen Wahl und Anordnung der Baugruppe der Stromanschlüsse (des Kabelanschlusses) nicht, eine Miniaturausführung des Beschleunigungsmessers bei gleichzeitiger Sicherung einer hohen Messgenauigkeit zu realisieren.

Offenbarung der Erfindung

Der Erfindung liegt die Aufgabe zugrunde, einen piezoelektrischen Beschleunigungsmesser zu schaffen, bei dem durch eine neue konstruktive Lösung der Anschlussstelle für die Stromanschlüsse und deren gegenseitige Anordnung die Schaffung einer Miniaturausführung eines piezoelektrischen Beschleunigungsmessers mit einer sinnvollen Gesamtanordnung, einem Minimum von Teilen, einem einfachen Herstellungsverfahren, mit der Möglichkeit, einen hohen Wert der axialen Empfindlichkeit und der Beschleunigungsmessgenauigkeit zu realisieren, gewährleistet ist.

Dies wird dadurch erreicht, dass in einem piezoelektrischen Beschleunigungsmesser der zylindrische piezoelektrische Messfühler, der eine Schubverformung durch ein Trägheitselement erfährt, dessen Aussenfläche mit der Innenfläche des zylindrischen piezoelektrischen Messfühlers spielfrei gekoppelt ist, in der Weise fest angeordnet ist, dass seine Höchstempfindlichkeitsachse praktisch parallel zur Aussen- und Innenfläche des zylindrischen piezoelektrischen Messfühlers ist und die Abnahme der elektrischen Ladung von den genannten Zylinderoberfläche mit Hilfe von Stromanschlüssen erfolgt, von denen der erste mit der Innenfläche des piezoelektrischen Messfühlers elektrisch verbunden und der zweite mit der Aussenfläche des letzteren spielfrei gekoppelt ist, gemäss der Erfindung im Trägheitselement in Richtung der Höchstempfindlichkeitsachse eine Durchgangsbohrung für die Durchführung des ersten Stromanschlusses in Richtung von einer Stirnfläche des zylindrischen piezoelektrischen Messfühlers zu dessen anderer Stirnfläche ausgeführt ist, in deren Nähe der erste Stromanschluss mit der inneren Seitenfläche des zylindrischen piezoelektrischen Messfühlers elektrisch verbunden ist, während der zweite Stromanschluss mit der äusseren Seitenfläche des zylindrischen piezoelektrischen Messfühlers seitens der ersten Stirnfläche des letztgenannten elektrisch verbunden ist, in deren Nähe die Anschlusstelle der Stromanschlüsse liegt, die mit einem die letzteren umschliessenden Versteifungsglied versehen ist.

Die Verringerung der Abmessungen und Masse des piezoelektrischen Beschleunigungsmessers wird durch eine bestimmte Anordnung der genannten Anschlusstelle in einem freien Raum unter dem schubbeanspruchten piezoelektrischen Messfühler, durch eine Miniaturausführung der Baugruppe des Anschlusses und deren Feststellung erreichte.

Es ist zweckmässig, das Versteifungsglied im piezoelektrischen Messfühler in Form einer Drahtbandage herzustellen.

Hierbei stellen die Stromanschlüsse schwingungsfeste Kabel dar, auf deren Anschlusstelle eine Drahtbandage aufgelegt ist, die mit einer Drahtspannung ohne Lücken zwischen den Windungen und mit den Bauelementen der Kabel gekoppelt ausgeführt ist.

Dies sichert die Steifigkeit und Festigkeit der Befestigung der Stromanschlüsse.

Durchaus nützlich ist es, den piezoelektrischen Beschleunigungsmesser in einem Gehäuse, das als zweiter Stromanschluss dient und bei dem ein Teil der inneren Seitenfläche mit der Aussenfläche des zylindrischen piezoelektrischen Messfühlers spielfrei gekoppelt ist, und in der Gehäusewand in der Nähe der ersten Stirnfläche des zylindrischen piezoelektrischen Messfühlers auf einer freien Oberfläche eine Gehäusebohrung zur Anordnung des Versteifungsgliedes auszuführen, dessen Achse auf der Höchstempfindlichkeitsachse des zylindrischen piezoelektrischen Messfühlers senkrecht steht.

Hierbei stellt das Versteifungsglied einen Teil der Kabellänge mit einer verlötteten Drahtbandage dar, deren Länge zur Sicherung der Steifigkeit und Festigkeit der Befestigung im Gehäuse den Durchmesser der Bandage überschreitet. Deshalb wird die Baugruppe des Kabelanschlusses (Versteifungsglied) bei deren nicht axialer, sondern perpendikularer Anordnung zur Höchstempfindlichkeitsachse des Beschleunigungsmessers mit der längeren Seite längs der Grundplatte des piezoelektrischen Messfühlers angeordnet, der in den meisten Fällen die Form eines kurzen Zylinders (bei dem der Durchmesser der Grundfläche die Dicke überschreitet) aufweist.

Eine derartige Form der Grundplatte ist für Miniaturausführungen der piezoelektrischen Beschleunigungsmesser besonders kennzeichnend.

Die Bedingung der Rechtwinkligkeit der Baugruppe des Kabelanschlusses (Versteifungsglied) sorgt für eine hohe Bauelementedichte im Ergebnis der Beachtung der Besonderheiten der Formen der Grundplatte und der Baugruppe des Kabelanschlusses.

Ferner erwies es sich als zweckmässig, den zylindrischen piezoelektrischen Messfühler im piezoelektrischen Beschleunigungsmesser im Gehäuse mit einer Auflage seitens der ersten Stirnfläche anzuordnen, die eine Kegelfläche mit der vom piezoelektrischen Messfühler weg gerichteten Kegelspitze und einem im Bereich von $90 < \alpha < 180°$ egewählten Kegelwinkel $\alpha$ aufweist, wobei die Gehäusebohrung auf der Kegelfläche der Auflage herausgeführt ist und deren Achse in einem Abstand L von der ersten Stirnfläche des zylindrischen piezoelektrischen Messfühlers liegt, dessen Grösse aus der Beziehung

$$r < L < (R - r_1)\, ctg\, \alpha/2 + \sqrt{r^2 - r_1^2}$$

gewählt ist, worin
r der Radius der Gehäusebohrung,
R der Radius des zylindrischen piezoelektrischen Messfühlers,
$r_1$ der Radius des ersten Stromanschlusses,
$\alpha$ der Kegelwinkel
sind.

Die Anordnung des Versteifungsgliedes in der Grundplatte des piezoelektrischen Messführung gestattet

5

es, dafür nicht nur das Volumen der Grundplatte, sondern auch das Volumen des Kegelraumes über der Auflage auszunutzen. Die Dicke der Grundplatte kann nicht minimal (Bruchteile des Millimeters) wegen einer Vergrösserung von Störungen infolge einer Verformungsempfindlichkeit sein, und in diesem Zusammenhang wird die Anordnung des Kabelanschlusses auf einer relativ dicken Grundplatte bevorzugt während von der anderen Seite das Kabel unter Benutzung des Kegelraumes herausgeführt und ein elektrischer Kontakt mit dem piezoelektrischen Messfühler hergestellt werden können.

Die Notwendigkeit, einen hohen Isolationswert (bis zu einigen G $\Omega$ ) zu gewährleisten, bedingt die Besonderheit des Kabelabschlusses im Gehäuse des piezoelektrischen Beschleunigungsmessers und die Notwendigkeit an einer Isolierstrecke von mindestens 2 mm Länge am Innenleiter. Die Anordnung dieser Strecke des Leiters hängt in den Miniaturkonstruktionen meistenteils mit bestimmten Schwierigkeiten, mit einer Vergrösserung der Abmessungen des Beschleunigungsmessers zusammen.

Im Zusammenhang damit lassen die Anordnung des Innenleiters mit der Isolation innerhalb des Trägheitselements und des Volumens des Kegelraumes über der Auflage sowie die Durchführung der Stromanschlüsse durch eine durch Kreuzung der Gehäusebohrung mit der Kegelfläche der Auflage gebildete Bohrung eine Verringerung der Abmessungen und Masse des piezoelektrischen Beschleunigungsmessers zu. Die Notwendigkeit, den Innenleiter in einer achssymmetrischen Bohrung des Trägheitselements unterzubringen, ist durch die Bedingung der Erreichung einer transversalen Mindestempfindlichkeit des piezoelektrischen Beschleunigungsmessers gegeben.

Die Wahl des Abstandes L sichert eine grössere Bauelementedichte bei erforderlicher Isolierung der Stromanschlüsse und bei erforderlicher Technologiegerechtheit der Montage. Die untere Grenze L6 (r) ist durch die Notwendigkeit der Sicherung einer elektrischen Isolierung der äusseren von der inneren Stromabnahmefläche des piezoelektrischen Messfühlers durch das Versteifungsglied und die obere Grenze

$$L < (R - r_I)\, ctg\, \alpha/2 + \sqrt{r^2 - r_I^2}$$

durch die Bedingung der Kreuzung und Bildung einer Bohrung bei der Kreuzung zur Durchführung und Auslötung des Innenleiters des Stromanschlusses durch das Trägheitselement hindurch gegeben. Die Ausführung der Konstruktion bei Nichteinhaltung der oberen Grenze führt zur Komplizierung der Technologie der Herstellung des Gehäuses (es wird eine zusätzliche Bohrung zur Verbindung des Kegelraumes mit der Gehäusebohrung erforderlich) und der Montage des piezoelektrischen Beschleunigungsmessers (die Herausführung des Kabels wird durch einen begenzten Krümmungsradius des Innenleiters mit der Isolierung und durch die Oberflächenreibung in der zusätzlichen Bohrung erschwert).

Die Verbesserung der Betriebseigenschaften, nämlich die Sicherung einer hohen Genauigkeit bei minimalen Abmessungen, die Erhöhung der Zuverlässigkeit des piezoelektrischen Beschleunigungsmessers, wird durch Verringerung des Einflusses des triboelektrischen Effektes auf einem Teil der Länge des Kabels an der Stelle seiner Befestigung und durch Erhöhung der Zuverlässigkeit der Baugruppe des Kabelanschlusses mit Hilfe des Versteifungsgliedes erreicht.

Die Drahtbandage, die mit einer Drahtspannung über die Gesamtlänge ohne Lücken zwischen den Windungen ausgeführt und mit der äusseren Isolation, dem Abschirmgeflecht und der inneren Isolation des Kabels aufeinanderfolgend und ununterbrochen gekoppelt ist, sorgt für eine gleichmässige radiale Steifigkeit zwischen den Strukturelementen des Kabels.

Beim Verlöten derartiger Bandage umhüllt das Lötmittel die Drahtwindungen, dringt auf Grund der Erscheinungen der Benetzbarkeit und Kapillarität über das Abschirmgeflecht unter die äussere Ioslation ein und sichert dadurch eine gleichmässige axiale Steifigkeit zwischen den Strukturelementen.

Dadurch wird auch der Einfluss des triboelektrischen Effektes auf den im Gehäuse zu befestigenden Teil des Kabels reduziert. Das Versteifungsglied wird in der Gehäusebohrung durch Löten unter Benutzung eines Lötmittels mit einer Schmelztemperatur befestigt, die unterhalb der Schmelztemperatur des die Bandage befestigenden Lötmittels liegt, wodurch die Steifigkeit zwischen den Strukturelementen des Kabels, die Drahtspannung in der Bandage, eine sichere Befestigung der letzteren im Gehäuse und ausserdem der erforderliche elektrische Kontakt und der hermetische Abschluss der Verbindung aufrechterhalten bleiben.

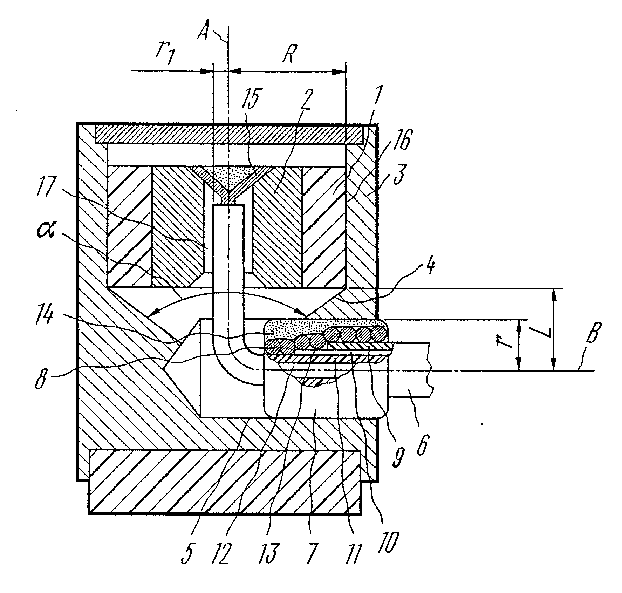

Kurze Beschreibung der Zeichnung

Die Erfindung soll durch die nachstehende Beschreibung eines konkreten Ausführungsbeispiels und der beigelegten Zeichnung näher erläutert werden, in der ein erfindungsgemässer piezoelektrischer Beschleunigungsmesser im Schnitt nach der Ebene des Verlaufes der Hächstempfindlichkeitsachse eines zylindrischen piezoelektrischen Messfühlers und der Bohrungsachse im Gehäuse zur Anordnung des Versteifungsgliedes dargestellt ist.

Bevorzugte Ausführungsvariante der Erfindung

Der zylindrische piezoelektrische Messfühler 1 ist in Form eines dünnwandigen piezoelektrischen Hohlzylinders ausgeführt, in dessen Innerem ein Trägheitselement 2 untergebracht ist.

Der zylindrische piezoelektrische Messfühler 1 ist in einem Gehäuse 3 untergebracht, in dem eine Auflage 4 in Kegelform mit einem in Grenzen von $90 < \alpha < 180°$ liegenden Kegelwinkel $\alpha$ und mit einer vom piezoelektrischen Messfühler 1 weg gerichteten Kegelspitze ausgeführt ist. Die Oberflächen des piezoelektrischen Messfühlers 1, des Gehäuses 3 und des Trägheitselements 2 sind spielfrei gekoppelt. Der piezoelektrische Messfühler 1 stützt sich mit der Aussenkante der ersten Stirnfläche auf die Auflage 4 und ist in der Weise fest angeordnet, dass seine Höchstempfindlichkeitsachse A praktisch parallel zur Aussen- und Innenfläche des piezoelektrischen Messfühlers 1 verläuft.

Die zylindrische Bohrung 5 zur Herausführung eines schwingungsfesten Kabels 6 und die Kegelfläche der Auflage 4 durchdringen einander. Durch die infolge der Durchdringung gebildete Bohrung 5 ist der Innenleiter mit der Isolierung durchgeführt. Die Achse B der Bohrung 5 liegt in einem Abstand L von der Grundplatte der Auflage 4, dessen Grösse aus der Beziehung

$$r < L < (R - r_I)\,\text{ctg}\ \alpha/2 + \sqrt{r^2 - r_I^2}$$

gewählt ist, worin

r der Radius der Bohrung 5 zur Herausführung des Kabels 6,
R der Radius der Grundplatte der Auflage 4,
$r_1$ der Radius der inneren Isolation des Kabels 6,
sind.

In der Bohrung 5 ist ein Versteifungsglied 7 des Kabels 6 starr befestigt. Die Drahtbandage 8 ohne Lücken zwischen den Windungen ist mit einer äusseren Isolation 9, einen Abschirmgeflecht 10 und einer inneren Isolation 11 aufeinanderfolgend und unterbrochen gekoppelt, in der ein Innenleiter 12 liegt. Die Drahtbandage 8 ist mit einer Drahtspannung hergestellt und mit einem Lötmittel 13 befestigt. Das Versteifungsglied 7 (Baugruppe des Anschlusses) des schwingungsgesten Kabels 6 ist die Bohrung 5 zur Herausführung des Kabels 6 durch ein Lötmittel 14 eingelötet. Die Schmelztemperatur des Lötmittels 14 liegt unterhalb der Schmelztemperatur des die Bandage 8 festhaltenden Lötmittels 13.

Das elektrische Signal wird von den Zylinderoberflächen des piezoelektrischen Messfühlers 1 mittels Stromanschlusse 15 und 16 abgenommen, deren erster mit der Innenfläche des piezoelektrischen Messfühlers 1 elektrisch verbunden und deren zweiter mit der Aussenfläche des letzteren spielfrei gekoppelt ist. Im konkreten Ausführungsbeispiel tritt als zweiter Stromanschluss 16 das Gehäuse 3 auf, bei dem ein Teil der inneren Seitenfläche mit der Aussenfläche des zylindrischen piezoelektrischen Messfühlers 1 spielfrei gekoppelt ist. In der Wand des Gehäuses 3 ist in der Nähe der ersten Stirnfläche des zylindrischen piezoelektrischen Messfühlers 1 auf der freien Kegelfläche der Auflage 4 gdie genannte Bohrung 5 im Gehäuse 3 zur Anordnung des Versteifungsgliedes 7 ausgeführt, dessen Achse B auf der Höchstempfindlichkeitsachse A des zylindricchen piezoelektrischen Messfühlers 1 senkrecht steht.

Im Trägheitselement 2 ist in Richtung der Höchstempfindlichkeitsachse A eine Durchgangsbohrung 17 zur Durchführung des ersten Stromancchlusses 15 in Richtung von der ersten Stirnfläche des zylindrischen piezoelektrischen Messfühlers 1 zu dessen zweiter Stirnfläche ausgehürt, in deren Nähe der erste Stromanschluss 15 mit der inneren Seitenfläche des piezoelektrischen Messfühlers 1 elektrisch verbunden ist. Der Stromanschluss 15 ist elektrisch an den Innenleiter 12 des Kabels 6 gelegt.

Der zweite Stromanschluss 16 ist vom zylindrischen piezoelektrischen Messfühler 1 seitens der ersten Stirnfläche des piezoelektrischen Messfühlers 1 herausgeführt, in deren Nähe die Anschlusstelle sätmlicher Stromanschlüsse 15, 16 liegt, die mit dem die letztgenannten umschliessenden Versteifungsglied 7 versehen ist. Der zweite Stromanschluss 16 ist mit dem Lötmittel 14 elektrisch verbunden.

Beim Einwirken der Beschleunigung in Richtung der Achse A des piezoelektrischen Beschleunigungsmessers erfährt der piezoelektrische Messfühlers 1 Schubverformungen, und an dessen Zylinderoberflächen entstehen elektrische Ladungen, die mit Hilfe der Stromanschlüsse 15 und 16 des Kabels 6 abgenommen werden.

Die erfindungsgemässe technische Lösung mit der genannten Gesamtheit der Merkmale gestattet es, eine Miniaturausführung des piezoelektrischen Beschleunigungsmessers zu realisieren.

In der Praxis wurde folgendes realisiert:

Bei einer axialen Empfindlichkeit des Beschleunigungsmessers von 0,3 pC/g, einer elektrischen Kapazität von 700 pF, einem Amplitudenbereich bis zu 20000 g, einer Eigenfrequenz von 100 kHz im befestigten Zustand beträgt die Masse des Geräts (unter Vernachlässigung der Masse des Kabels und Verbinders) 0,14 g und das Volumen 0,03 cm³.

Im Beschleunigungsmesser gelangt ein schwingungsfestes Kabel zum Einsatz, dessen Baugruppe des Anschlusses (Versteifungsglied 7) Abmessungen von 1,4 x x 2,2 mm aufweist. Ihr Volumen überschreitet das durch das Kabel 6 selbst im Gehäuse 3 des Beschleunigers eingenommene Volumen lediglich um das 1,5fache.

Der Kegelwinkel $\alpha$ der Auflage 4 macht 120° aus. Der Radius des Beschleunigungsmessers R der Auflage 4 ist gleich 1,25 mm, der Radius r der Bohrung 5 zur Herausführung des Kabels 6 beträgt 0,7 mm, der Radius $r_1$ der inneren Isolation 11 des Kabels 6 0,3 mm. Der Abstand L der Achse B der Bohrung 5 zur Herausführung des Kabels 6 von der Grundplatte der Auflage 4 ist gleich 0,95 mm. Mit Rücksicht auf Masstoleranzen für L genügen die möglichen Werte dieses Masses der angegebenen Beziehung.

Bei gleichen Werten der axialen Empfindlichkeit und der elektrischen Kapazität weist der bekannte Beschleunigungsmesser (SU, A, 1027625) eine um das 2 bis 4fache grössere Masse und ein um das 3 bis 10fache grösseres Volumen auf, während die Kabelanschlüsse ein um ein 5 bis 12faches grösseres Volumen besitzen.

In der Konstruktion des Versteifungsgliedes 7 des Kabels 6 wurden folgende Werkstoffe:

verzinnter Kupferdraht von 0,15 mm;

Lötmittel mit einer Schmelztemperatur von 183°C - zur Herstellung der Bandage 8; Lötmittel mit einer Schmelztemperatur von 131°C - zur Befestigung des Versteifungsgliedes 7 des Kabels 6 in der Bohrung 5 des Gehäuses 3 eingesetzt.

Die Herstellung der Drahtbandage erfolgte unter den Bedingungen:

$l_1 = d_1$; $l_2 = d_2$; $l_3 = d_3$,

worin $l_1$, $d_1$, $l_2$, $d_2$, $l_3$, $d_3$ die Längen bzw. Durchmesser der Abschnitte der Bauelemente des Kabels 6 sind, auf die die Bandage 8 aufgelegt ist, nämlich der inneren Isolation 11, des Abschirmgeflechts 10 und der äusseren Isolation 9.

Die erfindungsgemässe konstruktive Lösung gestattet es, die Störung wegen des Einflusses des triboelektrischen Effektes beispielsweise gegenüber der bekannten Lösung (SU, A, 1027625) um ein 5 bis 10faches zu reduzieren.

Die erfindungsgemässe Konstruktionsausführung des piezoelektrischen Beschleunigungsmessers ist einfach und fertigungsgerecht.

Die erfindungsgemässe technische Lösung gestattet es, gegenüber der bekannten die Masse um das mehr als 2fache und das Volumen um ein 3 bis 5faches zu vermindern.

Industrielle Anwendbarkeit

Die Erfindung kann eine weite Anwendung in verschiedenen Bereichen der Technik finden, wo Grössen und Richtungen der Wirkung des Summenvektors einer Stoss- oder Schwingungsbeschleunigung beispielweise bei dynamischen Prüfstanderprobungen und in Diagrnosesystemen, bei Explosionsversuchen (Schlagversuchen) und in automatischen Überwachungssystemen (Monitoring) festzustellen sind, sowie dort, wo Messungen an schwer zugänglichen Stellen von Miniaturbauelementen verschiedener Konstruktionen vorgenommen werden müssen.

**Patentansprüche**

**1.** Piezoelektrischer Beschleunigungsmesser, in dem der zylindrische piezoelektrische Messfühler (1) der eine Schubverformung durch ein Trägheitselement (2) erfährt, dessen Aussenfläche mit der Innenfläche des zylindrischen piezoelektrischen Messfühlers (1) spielfrei gekoppelt ist, in der Weise fest angeordnet ist, dass seine Höchstempfindlichkeitsachse (A) praktisch parallel zur Aussen- und Innenfläche des zylindrischen piezoelektrischen Messfühlers (1) ist und die Abnahme der elektrischen Ladung von den genannten Zylinderoberflächen mit Hilfe von Stromanschlüssen (15, 16) erfolgt, von denen der erste mit der Innenfläche des piezoelektrischen Messfühlers (1) elektrisch verbunden und der zweite mit der Aussenfläche des letzteren spielfrei gekoppelt ist, dadurch **gekennzeichnet**, dass im Trägheitselement (2) in Richtung der Höchstempfindlichkeitsachse (A) eine Durchgangsbohrung (17) für die Durchführung des ersten Stromanschlusses (15) in Richtung von einer Stirnfläche des zylindrischen piezoelektrischen Messfühlers (1) zu dessen anderer Stirnfläche ausgeführt ist, in deren Nähe der erste Stromanschluss (15) mit der inneren Seitenfläche des zylindrischen piezoelektrische Messfühlers (1) elektrisch verbunden ist, während der zweite Stromanschluss (16) mit der äusseren Seitenfläche des zylindrischen piezoelektrischen Messfühlers (1) seitens der ersten Stirnfläche des letztgenannten elektrisch verbunden ist, in deren Nähe die Anschlußstelle der Stromanschlüsse (15, 16) liegt, die mit einem die letzteren umschliessenden Versteifungsglied (7) versehen ist.

2. Piezoelektrischer Beschleunigungsmesser nach Anspruch 1, dadurch **gekennzeichnet**, dass das Versteifungsglied (7) in Form einer Drahtbandage (8) hergestellt ist.

3. Piezoelektrischer Beschleunigungsmesser nach Anspruch 2, dadurch **gekennzeichnet**, dass die Stromanschlüsse (15, 16) ein schwingungsfestes Kabel (6) darstellen, auf dessen Anschlusstelle eine verlötete Drahtmontage (8) aufgelegt ist, die mit einer Drahtspannung ohne Lücken zwischen den Windungen und mit den Bauelementen des Kabels (6) gekoppelt ausgeführt ist.

4. Piezoelektrischer Beschleunigungsmesser nach einem der Ansprüche 1, 2, dadurch **gekennzeichnet**, dass er ein Gehäuse (3) enthält, das als zweiter Stromanschluss (16) dient und bei dem ein Teil der inneren Seitenfläche mit der Aussenfläche des zylindrischen piezoelektrischen Messfühlers (1) spielfrei gekoppelt ist, und in der Wand dse Gehäuses (3) in der Nähe der ersten Stirnfläche des zylindrischen piezoelektrischen Messfühlers (1) auf einer freien Oberfläche eine Bohrung (5) im Gehäuse (3) zur Anordnung des Versteifungsgliedes (7) ausgeführt ist, dessen Achse (B) auf der Höchstempfindlichkeitsachse (A) des zylindrischen piezoelektrischen Messfühlers (1) senkrecht steht.

5. Piezoelektrischer Beschleunigungsmesser nach Anspruch 4, dadurch **gekennzeichnet**, dass der zylindrische piezoelektrische Messfühler (1) im Gehäuse (3) mit einer Auflage (4) seitens der ersten Stirnfläche angeordnet ist, die eine Kegelfläche mit der vom piezoelektrischen Messfühler (1) weg gerichteten Kegelspitze und einem im Bereich von $90 < \alpha < 180°$ gewählten Kegelwinkel $\alpha$ aufweist, wobei die Bohrung (5) im Gehäuse (3) auf der Kegelfläche der Auflage (4) herausgeführt ist und deren Achse (B) in einem Abstand L von der ersten Stirnfläche des zylindrischen piezoelektrischen Messfühlers (1) liegt, dessen Grösse aus der Beziehung

$$r < L < (R - r_I)\, ctg\ \alpha/2 + \sqrt{r^2 - r_I^2}$$

gewählt ist, worin
   r der Radius der Bohrung (5) im Gehäuse (3),
   R der Radius des zylindrischen piezoelektrischen Messfühlers (1),
   $r_1$ der Radius des ersten Stromanschlusses (15)
   $\alpha$ der Kegelwinkel
sind.

# INTERNATIONAL SEARCH REPORT

International Application No PCT/SU 89/00272

| I. CLASSIFICATION OF SUBJECT MATTER (if several classification symbols apply, indicate all) [6] |
|---|

According to International Patent Classification (IPC) or to both National Classification and IPC

IPC⁵        G 01P   15/09

## II. FIELDS SEARCHED

Minimum Documentation Searched [7]

| Classification System | Classification Symbols |
|---|---|
| IPC⁴ | G 01P 15/08– 15/09 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 551565, (V. P.Dunaevsky et al.) 29 May 1977 (29.05.77), the claims | 1–5 |
| A | SU, A1, 546822, (V. P. Dunaevsky et al.) 3 March 1977 (03.03.77), the claims (cited in the description) | 1–5 |
| A | SU, A1, 1023241, (V. V. Smirnov) 15 June 1983 (15.06.83), the claims, (cited in the description) | 1–5 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 17 May 1990 (17.05.90) | 17 July 1990 (17.07.90) |

| International Searching Authority | Signature of Authorized Officer |
|---|---|
| ISA/SU | |

Form PCT ISA/210 (second sheet) (January 1985)